# EUROPÄISCHE PATENTSCHRIFT

(11) **EP 4 054 089 B1**
(45) Veröffentlichungstag und Bekanntmachung des Hinweises auf die Patenterteilung: **28.02.2024**
(21) Anmeldenummer: 22164231.7
(22) Anmeldetag: 07.09.2015
(51) Int. Cl.: H04B 7/155, H04B 7/26, H04W 72/04, H04W 16/26, H04W 40/22, H04W 88/04, H04W 84/00

(54) **VORRICHTUNG, FAHRZEUG, MOBILKOMMUNIKATIONSSYSTEM, VERFAHREN UND COMPUTERPROGRAMM FÜR EINEN MOBILEN BASISSTATIONS-SENDEEMPFÄNGER**
DEVICE, VEHICLE, MOBILE COMMUNICATION SYSTEM, METHOD AND COMPUTER PROGRAM FOR A MOBILE BASE STATION TRANSMITTING RECEIVER
DISPOSITIF, VÉHICULE, SYSTÈME DE COMMUNICATION MOBILE, PROCÉDÉ ET PROGRAMME INFORMATIQUE POUR UN ÉMETTEUR-RÉCEPTEUR MOBILE DE STATION DE BASE

(30) Priorität: 25.09.2014 DE 102014219400
(43) Veröffentlichungstag der Anmeldung: 07.09.2022
(62) Teilanmeldung aus: 15762550.0
(73) Patentinhaber: VOLKSWAGEN AG, 38440 Wolfsburg (DE)
(72) Erfinder: Kwoczek, Andreas, 38165 Lehre (DE); Schack, Moritz, 38126 Braunschweig (DE); Mennenga, Björn, 38126 Braunschweig (DE)

(56) Entgegenhaltungen:
- WO-A1-2014/090068
- US-A1- 2014 071 884
- US-A1- 2014 094 208

## Beschreibung

Ausführungsbeispiele betreffen eine Vorrichtung für einen mobilen Basisstations-Sendeempfänger gemäß Anspruch 1, ein Fahrzeug gemäß Anspruch 10, ein Mobilkommunikationssystem gemäß Anspruch 12, ein Verfahren für einen mobilen Basisstations-Sendeempfänger gemäß Anspruch 13 und ein Programm mit einem Programmcode zum Durchführen eines Verfahrens für einen mobilen Basisstations-Sendeempfänger gemäß Anspruch 14.

Mobilkommunikationssysteme stehen vor immer neuen Herausforderungen: Sie werden für eine Vielzahl von Diensten, wie z.B. Navigation mit dynamisch nachladbarem Kartenmaterial, Musik- oder Videostreaming, Kommunikation über soziale Netzwerke und mobiles Internet genutzt. Gleichzeitig steigen die Anforderungen an die Betreiber der Mobilkommunikationssysteme, die ein immer dichteres Netz an Basisstationen errichten müssen, um die Bandbreitenanforderungen der Nutzer zu befriedigen. Darüber hinaus steigen allerdings auch die Anforderungen der Nutzer an die örtliche Verfügbarkeit einer Mobilfunkverbindung: Genügten in der Vergangenheit noch Papierkarten, Offline-Navigationsgeräte und Sprachtelefonie den Anforderungen der Benutzer in entlegenen Gegenden, so wird heute von den Betreibern erwartet, auch an entlegenen Orten eine adäquate Versorgung mit mobilem Internet zur Verfügung zu stellen.

Dies stellt Betreiber von Mobilkommunikationssysteme vor Herausforderungen, da ein Aufbau und Betrieb von zusätzlichen Basisstationen kostenaufwendig ist und es in manchen Fällen, wie z.B. in Berglandschaften und wenig besiedelten Gebieten, schwierig ist, eine vollständige Abdeckung zu erreichen.

Weitere Informationen über mobile Basisstations-Sendeempfänger sind etwa in "Mobile and wireless communications Enablers for the Twenty-twenty Information Society: Deliverable D6.2 report on horizontal topics, first and 5G system concept" und in der EURECOM-Präsentation zu "Open Air Interface Wireless Radio Platforms" zu finden.

US-Patentanmeldung 2012/0127916 A1 zeigt ein mobiles Kommunikationssystem mit einer Mehrzahl von Kommunikationsknoten (auch engl. Nodes) und einer Basisstation. Dabei umfasst die Mehrzahl von Kommunikationsknoten Verbindungsknoten, die innerhalb eines Abdeckungsbereichs der Basisstation angeordnet sind, und die Pakete für andere Kommunikationsknoten, die außerhalb des Abdeckungsbereichs positioniert sind, weiterleiten.

Eltahir et al. zeigen in "An Enhanced Hybrid Wireless Mesh Protocol (E-HWMP) Protocol for Multihop Vehicular Communications" einen Ansatz, um UMTS-Mobilfunkverbindungen und Multi-Hop-Fahrzeug-zu-Fahrzeug-Netzwerke zu verknüpfen.

US-Patentanmeldung 2010/0261479 A1 zeigt ein mobiles Kommunikationssystem, bei dem ein Mobilgerät in einem Abdeckungsbereich einer Basisstation angeordnet ist, und über eine Baumstruktur weiteren Mobilgeräten einen Datenzugriff auf das Datennetzwerk der Basisstation ermöglicht.

US-Patentanmeldung 2014/0071884 A1 zeigt ein IP-basiertes zelluläres Kommunikationssystem, das auf der Nutzung von Tunneln und Kapselungs-Verfahren aufbaut. Dabei werden verschiedene Konzepte zur Nutzung von Fahrzeug-basieren Basisstations-Sendeempfängern diskutiert.

US-Patentanmeldung 2014/094208 A1 zeigt ein Verfahren und eine Vorrichtung zum Bestimmen einer optimierten Drahtlos-Verbindungs-Auswahl für ein Mobilgerät entlang eines vorhergesagten Pfades. Dabei wird zuerst, unter mehreren möglichen vorhergesagten Pfaden, ein Pfad ausgewählt und dann die Qualität der Verbindung auf dem ausgewählten vorhergesagten Pfad vorhergesagt.

WO 2014/090068 A1 sowie sein Familienmitglied US 2015/319 668 A1 bezieht such auf ein Verfahren zum Verwalten eines Handover von Mobilgeräten. Dabei werden, für Zellen, die Kandidaten für einen Handover sind, vorhandene Ressourcen bestimmt. Basierend auf den vorhandenen Ressourcen wird dann der Handover durchgeführt.

Es besteht daher der Bedarf, auch an Orten, die nicht im Abdeckungsbereich von Basisstationen liegen, die Dienste von Mobilkommunikationssystemen anzubieten bzw. die Anbindung zu verbessern.

Diesem Bedarf wird durch einen mobilen Basisstations-Sendeempfänger gemäß Anspruch 1, ein Fahrzeug gemäß Anspruch 10, ein Mobilkommunikationssystem gemäß Anspruch 12, ein Verfahren für einen mobilen Basisstations-Sendeempfänger gemäß Anspruch 13 und ein Programm mit einem Programmcode zum Durchführen eines Verfahrens für einen mobilen Basisstations-Sendeempfänger gemäß Anspruch 14 Rechnung getragen.

Einige Ausführungsbeispiele können dies durch Verwendung ein oder mehrerer mobiler Basisstations-Sendeempfänger ermöglichen, die beispielsweise in Fahrzeuge integriert sind. Fällt z.B. der mobile Basisstations-Sendeempfänger eines ersten Fahrzeugs noch in den Abdeckungsbereich eines festen Basisstations-Sendeempfängers (oder eines weiteren mobilen Basisstations-Sendeempfängers), ein weiterer mobiler Basisstations-Sendeempfänger eines zweiten Fahrzeugs in den Abdeckungsbereich des mobilen Basisstations-Sendeempfängers des ersten Fahrzeugs, nicht jedoch in den Abdeckungsbereich des festen Basisstations-Sendeempfängers, so kann der mobile Basisstations-Sendeempfänger des zweiten Fahrzeugs das Mobilkommunikationssystem, das vom mobilen Basisstations-Sendeempfänger des ersten Fahrzeugs weitergereicht wird, in manchen Ausführungsbeispielen nutzen, und seinerseits den mobilen Basisstations-Sendeempfängern und mobilen Sendeempfängern, die sich in dessen Abdeckungsbereich befinden, zur Verfügung stellen. Unter Umständen lässt sich dadurch der Abdeckungsbereich des Mobilkommunikationssystems deutlich erweitern, ohne dass zusätzliche feste Basisstations-Sendeempfänger benötigt werden. Da mobile Basisstations-Sendeempfänger beispielsweise in Fahrzeuge integriert werden können, die ausreichend Energiereserven für den Betrieb von mobilen Basisstations-Sendeempfängern aufweisen, kann so unter Umständen eine stetige Versorgung innerhalb der Abdeckungsbereiche der mobilen Basisstations-Sendeempfänger erreicht werden, beispielsweise entlang einer Straße in einem nur unzureichend von festen Basisstations-Sendeempfängern versorgten Gebiet.

Beispielsweise ließe sich durch die Verkettung von mehreren mobilen Basisstations-Sendeempfängern auch die verfügbare Bandbreite, Latenz und Verfügbarkeit steigern, da möglicherweise verschiedene Glieder der Kette im Abdeckungsbereich von verschiedenen festen Basisstations-Sendeempfängern liegen, die entsprechend gleichzeitig genutzt werden können. Manche Ausführungsbeispiele können so eine Erweiterung eines zellularen Mobilfunksystems über mobile Basisstations-Sendeempfänger ermöglichen, beispielsweise durch eine mittels mehrerer mobiler Basisstations-Sendeempfänger ermöglichte Netzwerkkomponente mit Mehrfachweiterleitung.

Ausführungsbeispiele stellen daher einen (ersten) mobilen Basisstations-Sendeempfänger eines mobilen Kommunikationssystems zur Verfügung. Das mobile Kommunikationssystem weist ferner zumindest einen festen Basisstations-Sendeempfänger und zumindest einen weiteren (zweiten) mobilen Basisstations-Sendeempfänger auf. Der mobile Basisstations-Sendeempfänger weist dabei ein Sendeempfänger-Modul zur Kommunikation mit zumindest einem festen Basisstations-Sendeempfänger auf, in dessen Abdeckungsbereich er sich befindet. Darüber hinaus ist das Sendeempfänger-Modul dazu ausgebildet, um einen mobilen Abdeckungsbereich für den zumindest einen weiteren (zweiten) mobilen Basisstations-Sendeempfänger bereitzustellen, wobei der mobile Abdeckungsbereich den Abdeckungsbereich des zumindest einen festen Basisstations-Sendeempfängers zumindest teilweise um einen erweiterten Abdeckungsbereich überragt. Einige Ausführungsbeispiele erreichen dadurch eine Vergrößerung des Abdeckungsbereichs des Mobilkommunikationssystems.

Ferner werden Informationen über die Position und den Bewegungsvektor eines mobilen Basisstations-Sendeempfängers genutzt, um mit Hilfe eines Kontrollmoduls die Nutzung der Funkressourcen des mobilen Kommunikationssystems und eines anderen mobilen Kommunikationssystems abhängig von Position und Bewegungsvektor zu bestimmen.

In manchen Ausführungsbeispielen kann die Vorrichtung dazu ebenfalls ein Positionierungsmodul umfassen, das zur Bestimmung der Information über die Position und den Bewegungsvektor des mobilen Basisstations-Sendeempfängers ausgebildet ist. Durch die Nutzung der Positions- und Bewegungsinformationen kann dadurch unter Umständen eine bessere Nutzung vorhandener Funkressourcen oder eine Funkressourcennutzungsplan (wie z.B. eine Frequenzplanung oder -verteilung) erreicht werden.

In manchen Ausführungsbeispielen kann das Kontrollmodul ausgebildet sein, um basierend auf der Information über die Position und den Bewegungsvektor Informationen über eine Trajektorie des mobilen Basisstations-Sendeempfängers zu bestimmen. Basierend auf Informationen über diese Trajektorie und besser Informationen über die Frequenznutzung kann dann beispielsweise die Zuweisung der Funkressourcen entlang der Trajektorie durchgeführt werden. Dies kann eine bessere Koordination der genutzten Funkressourcen ermöglichen.

In manchen Ausführungsbeispielen kann das Mobilkommunikationssystem außerdem zumindest einen mobilen Sendeempfänger umfassen, wobei das Sendeempfängermodul zur Kommunikation mit dem zumindest einen mobilen Sendeempfänger ausgebildet ist, so dass beispielsweise mobile Sendeempfänger den von dem mobilen Basisstations-Sendeempfänger vergrößerten Abdeckungsbereich des Mobilkommunikationssystems nutzen können.

In manchen Ausführungsbeispielen kann der weitere mobile Basisstations-Sendeempfänger dazu ausgebildet sein, einen weiteren mobilen Abdeckungsbereich bereitzustellen, der den mobilen Abdeckungsbereich des ersten mobilen Basisstations-Sendeempfängers und den Abdeckungsbereich des festen Basisstations-Sendeempfängers erweitert. Dies lässt sich in Anwendungsbeispielen beispielsweise mit einer Reihe von mobilen Basisstations-Sendeempfängern kombinieren, so dass unter Umständen ein mehrschrittiges (auch engl. Multi-Hop) Netzwerk zur Erweiterung des Abdeckungsbereiches des festen Basisstations-Sendeempfängers gebildet werden kann, wodurch der Abdeckungsbereich des Mobilkommunikationssystems vergrößert wird.

In Ausführungsbeispielen kann das Sendeempfänger-Modul des ersten mobilen Basisstations-Sendeempfängers beispielsweise auch zur Kommunikation mit zumindest einem zweiten mobilen Basisstations-Sendeempfänger in dessen Abdeckungsbereich ausgebildet sein, und unter Umständen gleichzeitig dazu ausgebildet sein, einen mobilen Abdeckungsbereich für zumindest einen weiteren mobilen Basisstations-Sendeempfänger bereitzustellen. Dabei kann der mobile Abdeckungsbereich des ersten den mobilen Abdeckungsbereich des zumindest einen zweiten weiteren mobilen Basisstations-Sendeempfängers zumindest teilweise um einen erweiterten Abdeckungsbereich überragen. Dies ermöglicht die Erweiterung des Abdeckungsbereichs, auch wenn der mobile Basisstations-Sendeempfänger nicht im Abdeckungsbereich eines festen Basisstations-Sendeempfängers ist.

In manchen Ausführungsbeispielen kann das Sendeempfänger-Modul unter Umständen dazu ausgebildet sein, um in dem erweiterten Abdeckungsbereich eine andere Frequenz zu benutzen als der feste Basisstations-Sendeempfänger in dessen Abdeckungsbereich, um beispielsweise eine höhere Bandbreite und Diversität der genutzten Funkressourcen zu gewährleisten.

In Ausführungsbeispielen kann das Sendeempfängermodul ausgebildet sein, um über einen oder mehrere weitere mobile Basisstations-Sendeempfänger mit ein oder mehreren weiteren festen Basisstations-Sendeempfängern zu kommunizieren. Dies kann unter Umständen die Bandbreite und Ausfallsicherheit für die Kommunikation von Daten mit den festen Basisstations-Sendeempfängern erhöhen.

Fahrzeuge mit einer solchen Vorrichtung können ebenfalls ein Ausführungsbeispiel sein, wobei der mobile Basisstations-Sendeempfänger von dem Fahrzeug mit der zum Betrieb nötigen Energie versorgt wird. In Ausführungsbeispielen können auch die Antennen des Fahrzeugs zur Kommunikation mit festen Basisstations-Sendeempfängern, mobilen Basisstations-Sendeempfängern und/oder mobilen Sendeempfängern genutzt werden. Die Nutzung der Vorrichtung mit einem Fahrzeug kann in Ausführungsbeispielen die Nutzung der vorhandenen Energiereserven und die Nutzung der vorhandenen Flächen für große Antennen ermöglichen.

In Ausführungsbeispielen kann das Fahrzeug zur Kommunikation mit einem festen Basisstations-Sendeempfänger und zur direkten Kommunikation mit einem anderen Fahrzeug ausgebildet sein. Dies kann eine Maschine-zu-Maschine Kommunikation zwischen mehreren Fahrzeugen ermöglichen.

In manchen Ausführungsbeispielen können im Mobilkommunikationssystem wenigstens zwei sich überlappende Abdeckungsbereiche zweier mobiler Basisstations-Sendeempfänger unterschiedliche Frequenzbereiche verwenden. Dies kann unter Umständen die verfügbare Bandbreite erhöhen. Ausführungsbeispiele schaffen insofern auch einen mobilen Basisstations-Sendeempfänger, der die oben beschriebene Vorrichtung umfasst und ein Mobilkommunikationssystem mit einem mobilen Basisstations-Sendeempfänger, der eine oben beschriebene Vorrichtung umfasst.

Ausführungsbeispiele schaffen ferner ein Verfahren für einen mobilen Basisstations-Sendeempfänger eines mobilen Kommunikationssystems nach obiger Beschreibung. Das mobile Kommunikationssystem weist ferner zumindest einen festen Basisstations-Sendeempfänger und zumindest einen weiteren mobilen Basisstations-Sendeempfänger auf. Das Verfahren umfasst ein Kommunizieren mit zumindest einem festen Basisstations-Sendeempfänger in dessen Abdeckungsbereich und ein Bereitstellen eines mobilen Abdeckungsbereichs für den zumindest einen weiteren mobilen Basisstations-Sendeempfänger. Dabei überragt der mobile Abdeckungsbereich den Abdeckungsbereich des zumindest einen festen Basisstations-Sendeempfängers zumindest teilweise um einen erweiterten Abdeckungsbereich. Das Verfahren umfasst ferner ein Zuweisen von Funkressourcen des mobilen Kommunikationssystems oder eines anderen mobilen Kommunikationssystems basierend auf Informationen über eine Position und einen Bewegungsvektor des mobilen Basisstations-Sendeempfängers.

Ausführungsbeispiele schaffen ferner ein Programm mit einem Programmcode zum Durchführen des Verfahrens, wenn der Programmcode auf einem Computer, einem Prozessor, einem Controller oder einer programmierbaren Hardwarekomponente ausgeführt wird. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

### Figurenkurzbeschreibung

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Blockdiagram eines Ausführungsbeispiels eines mobilen Basisstations-Sendeempfängers in einem Mobilfunksystem mit einem festen Basisstations-Sendeempfänger, einem weiteren mobilen Basisstations-Sendeempfänger und einem mobilen Sendeempfänger;
Fig. 2 ein Ausführungsbeispiel im Zusammenspiel von zwei mobilen Basisstations-Sendeempfängern und einem festen Basisstations-Sendeempfänger mit den jeweiligen Abdeckungsbereichen;
Fig. 3 ein Ausführungsbeispiel von einem Fahrzeug, welches einen mobilen Basisstations-Sendeempfänger mit der Vorrichtung für den mobilen Basisstations-Sendeempfänger aufweist;
Fig. 4 ein Ausführungsbeispiel im Zusammenspiel mit mehreren festen Basisstations-Sendeempfängern, mit denen das Ausführungsbeispiel in einem mobilen Basisstations-Sendeempfänger über mehrere weitere mobile Basisstations-Sendeempfänger kommuniziert;
Fig. 5 ein Ausführungsbeispiel im Zusammenspiel mit einem festen Basisstations-Sendeempfänger und einem mobilen Sendeempfänger;
Fig. 6 ein Blockschaltbild eines Ablaufdiagramms eines Ausführungsbeispiels eines Verfahrens; und
Fig. 7 ein Ausführungsbeispiel in einer direkten Kommunikation zwischen Fahrzeugen.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer," " eine", "eines " und "der, die, das" auch die Plural-formen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

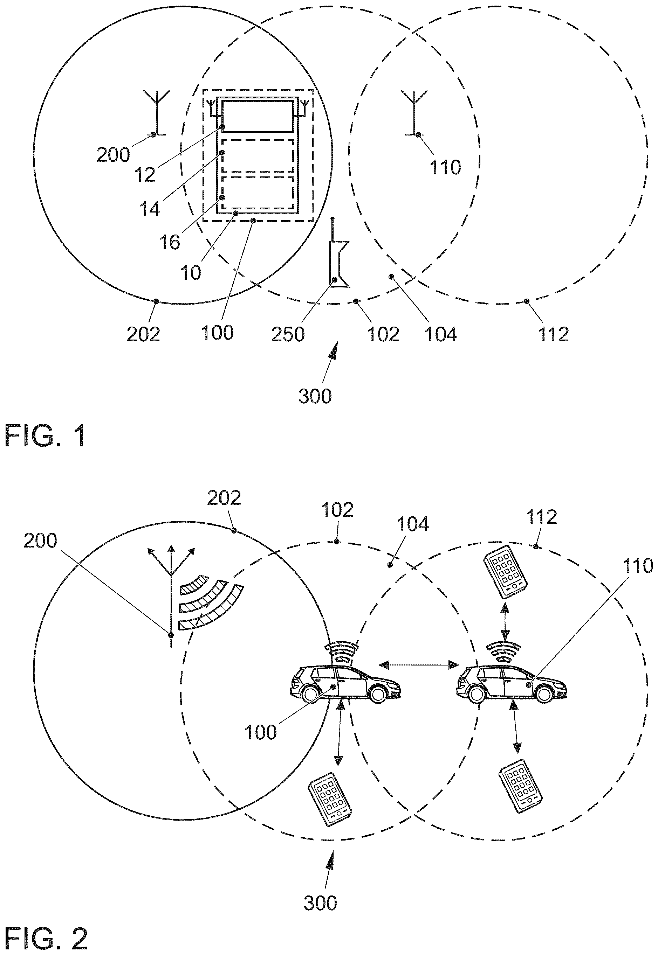

Fig. 1 illustriert ein Ausführungsbeispiel einer Vorrichtung 10 für einen mobilen Basisstations-Sendeempfänger 100 eines mobilen Kommunikationssystems 300.

Ausführungsbeispiele können daher von einem Sendeempfänger/Mobilfunkgerät Gebrauch machen, das zur Kommunikation von Daten über ein Mobilfunksystem mit einem Server oder Computer oder einem anderen Kommunikationspartner ausgebildet ist, der beispielsweise über Internet bzw. das World Wide Web (WWW) oder ein anderes Netz erreichbar ist. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz, mobiles Kommunikationssystem und Mobilfunknetzwerk synonym benutzt.

Das mobile Kommunikationssystem 300 weist ferner zumindest einen festen Basisstations-Sendeempfänger 200 und zumindest einen weiteren mobilen Basisstations-Sendeempfänger 110 auf. Im Folgenden wird angenommen, dass ein solches Mobilfunksystem 300 zumindest einen stationären Sendeempfänger im Sinne einer festen Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger (Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem Kraftfahrzeug (KFZ)), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Ein Basisstations-Sendeempfänger oder eine Basisstation (diese Begriffe können äquivalent verwendet werden) kann ausgebildet sein, um mit einem oder mehreren aktiven Mobilfunkgeräten zu kommunizieren und um in oder benachbart zu einem Versorgungs- oder Abdeckungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico-, Metro- oder Femto-Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Auto, etc., entsprechen. Ein mobiler Sendeempfänger kann auch als engl. "User Equipment (UE)" oder Mobile im Einklang mit der 3GPP-Terminologie bezeichnet werden.

Ein Basisstations-Sendeempfänger oder eine Basisstation kann zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder ein Basisstations-Sendeempfänger einer NodeB, einer eNodeB, einer Base Transceiver Station (BTS), einen Zugangspunkt, einen Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden. Darüber hinaus werden feste und mobile Basisstationen unterscheiden, wobei mobile Basisstationen auch als mobile Relay-Stationen fungieren können.

Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Close Subscriber Group CSG") und offenen Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann Abdeckungsbereich einer kleinen Zelle zumindest teilweise von einem Versorgungsbereich einer anderen Zelle umgeben sein oder teilweise mit dem Versorgungsbereich einer z.B. Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen KFZ- oder einen Gate-Bereich auf dem Flughafen abzudecken, d.h. ihr Sendegebiet kann einen Durchmesser von unter 50m zu haben.

Die Vorrichtung umfasst weiterhin ein Sendeempfänger-Modul 12 zur Kommunikation mit zumindest einem festen Basisstations-Sendeempfänger 200 im Abdeckungsbereich 202 des zumindest einen festen Basisstations-Sendeempfängers 200. In Ausführungsbeispielen kann das Sendeempfänger-Modul 12 typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. Das Sendeempfänger-Modul 12 ist ausgebildet, um einen mobilen Abdeckungsbereich 102 für den zumindest einen weiteren mobilen Basisstations-Sendeempfänger 110 bereitzustellen, wobei der mobile Abdeckungsbereich 102 den Abdeckungsbereich 202 des zumindest einen festen Basisstations-Sendeempfängers 200 zumindest teilweise um einen erweiterten Abdeckungsbereich 104 überragt.

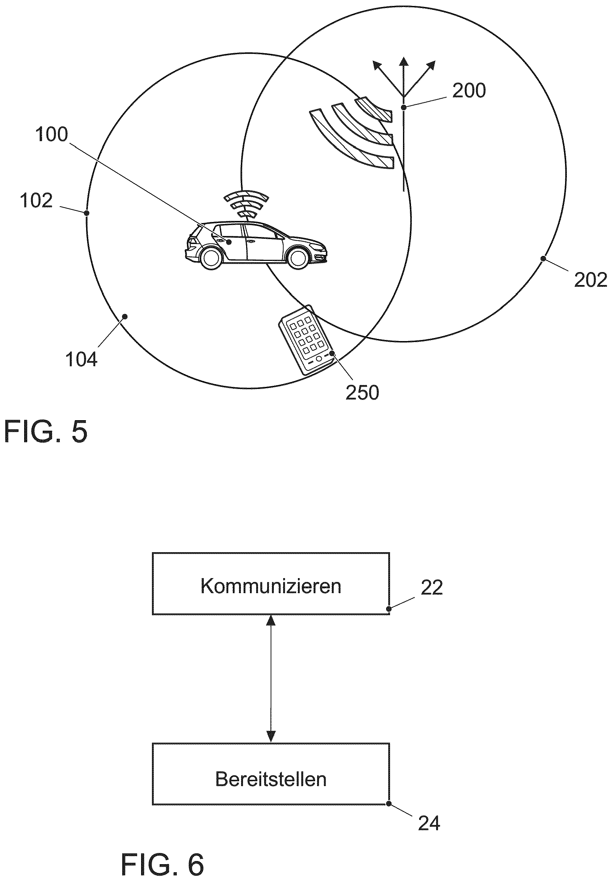

Ferner illustriert Fig. 1 ein Ausführungsbeispiel bei dem das Kommunikationssystem 300 zumindest einen mobilen Sendeempfänger 250 umfasst und wobei das Sendeempfängermodul 12 ferner zur Kommunikation mit dem zumindest einem mobilen Sendeempfänger 250 ausgebildet ist. Dies kann, wie in Fig. 5 illustriert wird, beispielsweise auch geschehen, wenn kein weiterer mobiler Basisstations-Sendeempfänger mit dem mobilen Basisstations-Sendeempfänger 100 kommuniziert.

In weiteren Ausführungsbeispielen illustrieren die Figuren 1 und 2 auch wie der weitere mobile Basisstations-Sendeempfänger 110 ausgebildet ist, um einen weiteren mobilen Abdeckungsbereich 112 bereitzustellen, der den mobilen Abdeckungsbereich 102 und den Abdeckungsbereich 202 des festen Basisstations-Sendeempfängers 200 erweitert. In Anwendungsbeispielen kann so beispielsweise die Vorrichtung 10 ausgebildet werden, um mit dem weiteren mobilen Basisstations-Sendeempfänger 110 ein mehrschrittiges (auch engl. Multi-Hop) Netzwerk zur Erweiterung des Abdeckungsbereiches 202 des festen Basisstations-Sendeempfängers 200 zu bilden. In Ausführungsbeispielen kann ein solches Multi-Hop-Netzwerk etwa auch genutzt werden, um ein eigenes Netzwerk unabhängig von Betreibern von Mobilkommunikationssystemen aufzubauen, wobei dabei beispielsweise ungenutzte Frequenzbereiche oder Frequenzbereiche von kooperierenden Betreibern genutzt werden. Das Netzwerk kann dann unter Umständen genutzt werden um kooperierenden Betreibern Netzkapazität zur Verfügung zu stellen.

Die Vorrichtung 10 umfasst ferner ein Kontrollmodul 16 zur Kontrolle des Sendeempfänger-Moduls 12. In Ausführungsbeispielen kann die Kontrolleinrichtung bzw. das Kontrollmodul 16 einem beliebigen Controller oder Prozessor oder einer programmierbaren Hardwarekomponente entsprechen. Beispielsweise kann das Kontroll-Modul 16 auch als Software realisiert sein, die für eine entsprechende Hardwarekomponente programmiert ist. Insofern kann das Kontrollmodul 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16 denkbar.

Das Kontrollmodul 16 ist ausgebildet zur Zuweisung von Funkressourcen des mobilen Kommunikationssystems 300 oder eines anderen mobilen Kommunikationssystems an das Sendeempfängermodul 12. In Ausführungsbeispielen basiert die Zuweisung auf Informationen über eine Position und einen Bewegungsvektor des mobilen Basisstations-Sendeempfängers 100. In manchen Ausführungsbeispielen kann die Vorrichtung ferner ein Positionierungsmodul 14 umfassen, das zur Bestimmung der Information über die Position und den Bewegungsvektor des mobilen Basisstations-Sendeempfängers 100 ausgebildet ist. In Ausführungsbeispielen kann das Positionierungsmodul 14 als beliebige Komponente implementiert sein, die eine Ermittlung oder Bestimmung von Information bzgl. einer Position der Vorrichtung oder des Positionierungsmoduls 14 erlaubt. Denkbar sind beispielsweise Empfänger für satellitengestützte Navigationssysteme, z.B. ein GPS-Empfänger (von engl. Global Positioning System, globales Positionierungssystem), oder auch andere Komponenten, die beispielsweise über Triangulation von empfangen Funksignalen eine Positionsbestimmung zulassen.

In manchen Ausführungsbeispielen kann ferner das Kontrollmodul 16 ausgebildet sein, um basierend auf der Information über die Position und den Bewegungsvektor Informationen über eine Trajektorie des mobilen Basisstations-Sendeempfängers 100 zu bestimmen, und die Zuweisung der Funkressourcen basierend auf der Information über die Trajektorie und eine Frequenznutzungsinformation entlang der Trajektorie durchzuführen, um durch Interferenzmanagement oder gezieltes Funkressourcen-Management die verfügbare Bandbreite zu erhöhen. Die Informationen über Position, Bewegungsvektor und Trajektorie können in Ausführungsbeispielen ebenfalls für andere Dienste, beispielsweise Notrufdienste und Fahrassistenz genutzt werden.

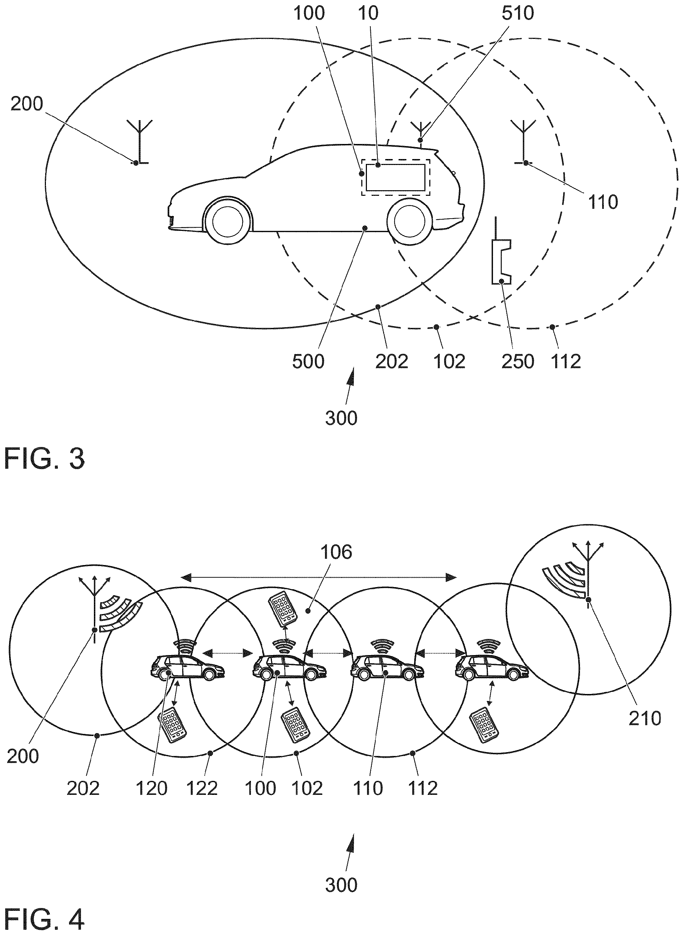

Wie Fig. 3 zeigt kann in manchen Ausführungsbeispielen ein Fahrzeug die Vorrichtung 10 für einen mobilen Basisstations-Sendeempfänger 100 aufweisen, wobei hier der mobile Basisstations-Sendeempfänger 100 von dem Fahrzeug 500 mit der zum Betrieb nötigen Energie versorgt wird. Als Fahrzeuge kommen alle denkbaren Fahrzeuge, wie Kraftfahrzeuge oder Lastkraftfahrzeuge, aber auch Zweiräder, wie Motorräder oder Fahrräder sowie Schiffe und Flugzeuge in Betracht. Ausführungsbeispiele können sich insbesondere für Schiffe positiv auswirken, wenn die Reichweite der normalerweise nur an Land oder in Küstennähe verfügbaren kommerziellen Mobilfunknetze auch auf See angeboten werden können, wo eine herkömmliche Abdeckung mit großen Problemen verbunden ist. Ähnlich lässt es sich auf Lufträume erweitern, beispielsweise in Zusammenspiel mit direkter Luftbodenkommunikation (auch engl. Direct-Air-to-Ground Communication).

Der mobile Basisstations-Sendeempfänger kann dabei beispielsweise die Antennen 510 des Fahrzeugs 500 zur Kommunikation mit den zumindest einen festen Basisstations-Sendeempfänger 200 und/oder zur Kommunikation mit dem zumindest einem weiteren mobilen Basisstations-Sendeempfänger 110 und/oder zur Kommunikation mit dem zumindest einen mobilen Sendeempfänger 250 nutzen. Durch die mögliche Nutzung des Basisstations-Sendeempfängers 100 bzw. der Vorrichtung 10m in einem Fahrzeug ist in den weiteren Figuren der Basisstations-Sendeempfänger 100 bzw. die Vorrichtung 10 oft als sendendes Fahrzeug 500 dargestellt.

Die Integration des mobilen Basisstations-Sendeempfängers 100 in ein Fahrzeug 500 kann unter Umständen in einen vergrößerten Abdeckungsbereich resultieren, da die Antenne 510 beispielsweise Vorteile bezüglich der Höhe und der Größe und dem Abstand von Multiple Input Multiple Output (MIMO)-Antennen haben kann. Insbesondere können auf der Fahrzeugfläche unter Umständen mehr Antennenelemente angebracht werden, als dies sinnvoll auf einer herkömmlichen Mobilstation sinnvoll möglich wäre und entsprechend komplexere Empfangs- und Sendekonzepte verwendet werden, da mehr Platz und Energie zur Verfügung steht.

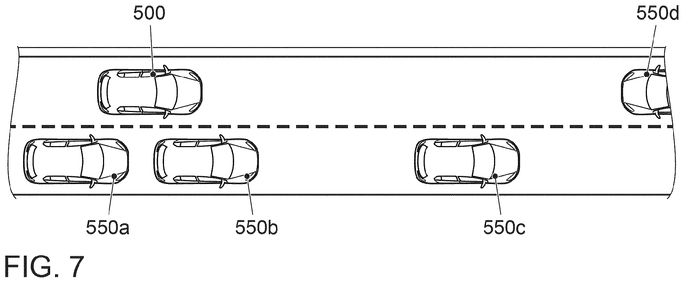

Wie Fig. 7 illustriert kann das Sendeempfängermodul außer zur Kommunikation mit einem festen Basisstations-Sendeempfänger 200 beispielsweise auch zur direkten Kommunikation mit einem anderen Fahrzeug 550 ausgebildet sein. Dabei kann das Fahrzeug in direkter Kommunikation mit weiteren Fahrzeugen 550a-d beispielsweise Überholvorgänge und Fahrbahnzusammenführungen zwischen mehreren Fahrzeugen koordinieren und/oder Wildunfälle und andere Gefahrensituationen vermeiden. Insbesondere kann durch eine solche Kommunikation eine zum Einscheren eines Fahrzeugs zwischen weiteren Fahrzeugen notwendige Lücke koordiniert werden.

Fig. 4 zeigt ein Ausführungsbeispiel, wobei das Sendeempfänger-Modul 12 zur Kommunikation mit zumindest einem weiteren mobilen Basisstations-Sendeempfänger 120 in einem Abdeckungsbereich 122 des zumindest einen weiteren mobilen Basisstations-Sendeempfängers 120 ausgebildet ist, wobei das Sendeempfänger-Modul 12 ferner ausgebildet ist, um einen mobilen Abdeckungsbereich 102 für den zumindest einen mobilen Basisstations-Sendeempfänger 110 bereitzustellen, wobei der mobile Abdeckungsbereich 102 den mobilen Abdeckungsbereich 122 des zumindest einen weiteren mobilen Basisstations-Sendeempfängers 120 zumindest teilweise um einen erweiterten Abdeckungsbereich 106 überragt. In manchen Anwendungsbeispielen kann das Sendeempfangsmodul 12 ferner ausgebildet sein, um in dem erweiterten Abdeckungsbereich 102 oder 106 eine andere Frequenz zu benutzen als der feste Basisstations-Sendeempfänger 200 im Abdeckungsbereich 202. In Ausführungsbeispielen können außerdem beispielsweise wenigstens zwei sich überlappende Abdeckungsbereiche zweier mobiler Basisstations-Sendeempfänger unterschiedliche Frequenzbereiche verwenden.

Wie die Fig. 4 weiter zeigt, kann das Sendeempfängermodul 12 in Ausführungsbeispielen ferner ausgebildet sein, um über einen oder mehrere weitere mobile Basisstations-Sendeempfänger 120 und 110 mit ein oder mehreren weiteren festen Basisstations-Sendeempfängern 210 zu kommunizieren. Dadurch lässt sich die Kapazität der Anbindungsverbindung (auch engl. Backhaul Link) des Mobilen Kommunikationssystem an den beteiligten mobilen Basisstations-Sendeempfängern 100, 110 und 120 steigern und/oder deren Latenz verringern, bzw. allgemein eine Verbindungszuverlässigkeit steigern.

Fig 6. zeigt ein Ablaufdiagramm eines Ausführungsbeispiels eines Verfahrens für einen mobilen Basisstations-Sendeempfänger 100 eines mobilen Kommunikationssystems 300. Dabei weist das mobile Kommunikationssystem 300 ferner zumindest einen festen Basisstations-Sendeempfänger 200 und zumindest einen weiteren mobilen Basisstations-Sendeempfänger 110 auf. Das Verfahren umfasst ein Kommunizieren 22 mit zumindest einem festen Basisstations-Sendeempfänger 200 im Abdeckungsbereich 202 des zumindest einen festen Basisstations-Sendeempfängers 200 und ein Bereitstellen 24 eines mobilen Abdeckungsbereichs 102 für den zumindest einen weiteren mobilen Basisstations-Sendeempfänger 110, wobei der mobile Abdeckungsbereich 102 den Abdeckungsbereich 202 des zumindest einen festen Basisstations-Sendeempfängers 200 zumindest teilweise um einen erweiterten Abdeckungsbereich 104 überragt.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden, wobei der Schutzumfang der Erfindung durch die angefügten Ansprüche definiert ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Sendeempfängermodul
- 14: Positionierungsmodul
- 16: Kontrollmodul
- 22: Kommunikation
- 24: Bereitstellung
- 100: Mobiler Basisstations-Sendeempfänger
- 102: Abdeckungsbereich des mobilen Basisstations-Sendeempfängers
- 104: Erweiterter Abdeckungsbereich des mobilen Basisstations-Sendeempfängers
- 106: Erweiterter Abdeckungsbereich des mobilen Basisstations-Sendeempfängers
- 110: Weiterer mobiler Basisstations-Sendeempfänger
- 112: Abdeckungsbereich des weiteren mobilen Basisstations-Sendeempfängers
- 120: Weiterer mobiler Basisstations-Sendeempfänger
- 122: Abdeckungsbereich des weiteren mobilen Basisstations-Sendeempfängers
- 200: Fester Basisstations-Sendeempfänger
- 202: Abdeckungsbereich des festen Basisstations-Sendeempfängers
- 250: Mobiler Sendeempfänger
- 300: Mobilkommunikationssystem
- 500: Fahrzeug
- 510: Antenne des Fahrzeugs
- 550 (a-d): Weiteres Fahrzeug

## Patentansprüche

1. Vorrichtung (10) für einen mobilen Basisstations-Sendeempfänger (100) eines mobilen Kommunikationssystems (300), wobei das mobile Kommunikationssystem (300) ferner zumindest einen festen Basisstations-Sendeempfänger (200) und zumindest einen ersten weiteren mobilen Basisstations-Sendeempfänger (110) aufweist, die Vorrichtung (10) umfassend
ein Sendeempfänger-Modul (12) zur Kommunikation mit dem zumindest einen festen Basisstations-Sendeempfänger (200) im Abdeckungsbereich (202) des zumindest einen festen Basisstations-Sendeempfängers (200), wobei das Sendeempfänger-Modul (12) ausgebildet ist, um einen mobilen Abdeckungsbereich (102) für den ersten weiteren mobilen Basisstations-Sendeempfänger (110) bereitzustellen, wobei der mobile Abdeckungsbereich (102) den Abdeckungsbereich (202) des zumindest einen festen Basisstations-Sendeempfängers (200) zumindest teilweise um einen erweiterten Abdeckungsbereich (104) überragt;
ein Kontrollmodul (16) zur Kontrolle des Sendeempfänger-Moduls (12), wobei das Kontrollmodul (16) zur Zuweisung von Funkressourcen des mobilen Kommunikationssystems (300) oder eines anderen mobilen Kommunikationssystems an das Sendeempfängermodul (12) basierend auf Informationen über eine Position und einen Bewegungsvektor des mobilen Basisstations-Sendeempfängers ausgebildet ist.

2. Vorrichtung gemäß Anspruch 1, die ferner ein Positionierungsmodul (14) umfasst, das zur Bestimmung der Information über die Position und den Bewegungsvektor des mobilen Basisstations-Sendeempfängers (100) ausgebildet ist.

3. Vorrichtung gemäß der Ansprüche 1 oder 2, wobei das Kontrollmodul (16) ausgebildet ist, um basierend auf der Information über die Position und den Bewegungsvektor Informationen über eine Trajektorie des mobilen Basisstations-Sendeempfängers (100) zu bestimmen, und die Zuweisung der Funkressourcen basierend auf der Information über die Trajektorie und eine Frequenznutzungsinformation entlang der Trajektorie durchzuführen.

4. Vorrichtung gemäß einem der Ansprüche 1 bis 3, wobei das Kommunikationssystem (300) zumindest einen mobilen Sendeempfänger (250) umfasst und wobei das Sendeempfängermodul (12) ferner zur Kommunikation mit dem zumindest einem mobilen Sendeempfänger (250) ausgebildet ist.

5. Vorrichtung gemäß einem der Ansprüche 1 bis 4, wobei der erste weitere mobile Basisstations-Sendeempfänger (110) ausgebildet ist, um einen weiteren mobilen Abdeckungsbereich (112) bereitzustellen, der den mobilen Abdeckungsbereich (102) und den Abdeckungsbereich (202) des festen Basisstations-Sendeempfängers (200) erweitert.

6. Vorrichtung gemäß einem der vorangehenden Ansprüche, die ausgebildet ist, um mit dem ersten weiteren mobilen Basisstations-Sendeempfänger (110) ein mehrschrittiges (auch engl. Multi-Hop) Netzwerk zur Erweiterung des Abdeckungsbereiches (202) des festen Basisstations-Sendeempfängers (200) zu bilden.

7. Vorrichtung gemäß einem der vorangehenden Ansprüche, wobei das Sendeempfänger-Modul (12) zur Kommunikation mit einem zweiten weiteren mobilen Basisstations-Sendeempfänger (120) in einem Abdeckungsbereich (122) des zweiten weiteren mobilen Basisstations-Sendeempfängers (120) ausgebildet ist, wobei das Sendeempfänger-Modul (12) ferner ausgebildet ist, um einen mobilen Abdeckungsbereich (102) für den ersten weiteren mobilen Basisstations-Sendeempfänger (110) bereitzustellen, wobei der mobile Abdeckungsbereich (102) des Sendeempfänger-Moduls (12) den mobilen Abdeckungsbereich (122) des zweiten weiteren mobilen Basisstations-Sendeempfängers (120) zumindest teilweise um einen erweiterten Abdeckungsbereich (106) überragt.

8. Vorrichtung gemäß einem der vorangehenden Ansprüche, wobei das Sendeempfangsmodul (12) ausgebildet ist, um in dem erweiterten Abdeckungsbereich (102;106) eine andere Frequenz zu benutzen als der feste Basisstations-Sendeempfänger (200) im Abdeckungsbereich (202).

9. Vorrichtung gemäß einem der vorangehenden Ansprüche, wobei das Sendeempfängermodul (12) ausgebildet ist, um über einen oder mehrere weitere mobile Basisstations-Sendeempfänger (120;110) mit ein oder mehreren weiteren festen Basisstations-Sendeempfängern (210) zu kommunizieren.

10. Fahrzeug (500) mit einer Vorrichtung nach Anspruch 1, wobei der mobile Basisstations-Sendeempfänger (100) von dem Fahrzeug (500) mit der zum Betrieb nötigen Energie versorgt wird und/oder Antennen (510) des Fahrzeugs (500) zur Kommunikation mit den zumindest einen festen Basisstations-Sendeempfänger (200) und/oder zur Kommunikation mit dem ersten weiteren mobilen Basisstations-Sendeempfänger (110) und/oder zur Kommunikation mit dem zumindest einen mobilen Sendeempfänger (250) nutzt.

11. Fahrzeug gemäß Anspruch 10, das zur Kommunikation mit einem festen Basisstations-Sendeempfänger (200) und zur direkten Kommunikation mit einem anderen Fahrzeug ausgebildet ist.

12. Mobilkommunikationssystem mit mehreren Vorrichtungen gemäß Anspruch 1, wobei wenigstens zwei sich überlappende Abdeckungsbereiche zweier mobiler Basisstations-Sendeempfänger unterschiedliche Frequenzbereiche verwenden.

13. Verfahren für einen mobilen Basisstations-Sendeempfänger (100) eines mobilen Kommunikationssystems (300), wobei das mobile Kommunikationssystem (300) ferner zumindest einen festen Basisstations-Sendeempfänger (200) und zumindest einen ersten weiteren mobilen Basisstations-Sendeempfänger (110) aufweist, umfassend
Kommunizieren (22) mit dem zumindest einen festen Basisstations-Sendeempfänger (200) im Abdeckungsbereich (202) des zumindest einen festen Basisstations-Sendeempfängers (200);
Bereitstellen (24) eines mobilen Abdeckungsbereichs (102) für den ersten weiteren mobilen Basisstations-Sendeempfänger (110), wobei der mobile Abdeckungsbereich (102) den Abdeckungsbereich (202) des zumindest einen festen Basisstations-Sendeempfängers (200) zumindest teilweise um einen erweiterten Abdeckungsbereich (104) überragt
Zuweisen von Funkressourcen des mobilen Kommunikationssystems (300) oder eines anderen mobilen Kommunikationssystems an ein Sendeempfänger-Modul (12) des mobilen Basisstations-Sendeempfängers (100) basierend auf Informationen über eine Position und einen Bewegungsvektor des mobilen Basisstations-Sendeempfängers.

14. Programm mit einem Programmcode zum Durchführen des Verfahrens nach Anspruch 13, wenn der Programmcode auf einem Computer, einem Prozessor, einem Controller (16) oder einer programmierbaren Hardwarekomponente ausgeführt wird.

## Claims

1. Apparatus (10) for a mobile base station transceiver (100) of a mobile communication system (300), wherein the mobile communication system (300) further has at least one fixed base station transceiver (200) and at least one first further mobile base station transceiver (110), the apparatus (10) comprising
a transceiver module (12) for communication with the at least one fixed base station transceiver (200) in the coverage area (202) of the at least one fixed base station transceiver (200), wherein the transceiver module (12) is designed to provide a mobile coverage area (102) for the first further mobile base station transceiver (110), the mobile coverage area (102) projecting beyond the coverage area (202) of the at least one fixed base station transceiver (200) at least to some extent by an extended coverage area (104);
a control module (16) for controlling the transceiver module (12), wherein the control module (16) is designed to allocate radio resources of the mobile communication system (300) or of another mobile communication system to the transceiver module (12) based on information about a position and a motion vector of the mobile base station transceiver.

2. Apparatus according to Claim 1, which further comprises a positioning module (14) that is designed to determine the information about the position and the motion vector of the mobile base station transceiver (100) .

3. Apparatus according to Claim 1 or 2, wherein the control module (16) is designed to take the information about the position and the motion vector as a basis for determining information about a trajectory of the mobile base station transceiver (100), and to perform the allocation of the radio resources based on the information about the trajectory and a piece of frequency use information along the trajectory.

4. Apparatus according to one of Claims 1 to 3, wherein the communication system (300) comprises at least one mobile transceiver (250) and wherein the transceiver module (12) is further designed for communication with the at least one mobile transceiver (250).

5. Apparatus according to one of Claims 1 to 4, wherein the first further mobile base station transceiver (110) is designed to provide a further mobile coverage area (112) that extends the mobile coverage area (102) and the coverage area (202) of the fixed base station transceiver (200) .

6. Apparatus according to one of the preceding claims, which is designed to form with the first further mobile base station transceiver (110) a multi-hop network for extending the coverage area (202) of the fixed base station transceiver (200).

7. Apparatus according to one of the preceding claims, wherein the transceiver module (12) is designed for communication with a second further mobile base station transceiver (120) in a coverage area (122) of the second further mobile base station transceiver (120), wherein the transceiver module (12) is further designed to provide a mobile coverage area (102) for the first further mobile base station transceiver (110), the mobile coverage area (102) of the transceiver module (12) projecting beyond the mobile coverage area (122) of the second further mobile base station transceiver (120) at least to some extent by an extended coverage area (106).

8. Apparatus according to one of the preceding claims, wherein the transceiver module (12) is designed to use a different frequency in the extended coverage area (102; 106) than the fixed base station transceiver (200) in the coverage area (202).

9. Apparatus according to one of the preceding claims, wherein the transceiver module (12) is designed to communicate with one or more further fixed base station transceivers (210) via one or more further mobile base station transceivers (120; 110).

10. Vehicle (500) having an apparatus according to Claim 1, wherein the mobile base station transceiver (100) is supplied with the power required for operation by the vehicle (500) and/or uses antennas (510) of the vehicle (500) for communication with the at least one fixed base station transceiver (200) and/or for communication with the first further mobile base station transceiver (110) and/or for communication with the at least one mobile transceiver (250).

11. Vehicle according to Claim 10, which is designed for communication with a fixed base station transceiver (200) and for direct communication with another vehicle.

12. Mobile communication system having multiple apparatuses according to Claim 1, wherein at least two overlapping coverage areas of two mobile base station transceivers use different frequency bands.

13. Method for a mobile base station transceiver (100) of a mobile communication system (300), wherein the mobile communication system (300) further has at least one fixed base station transceiver (200) and at least one first further mobile base station transceiver (110), comprising
communicating (22) with the at least one fixed base station transceiver (200) in the coverage area (202) of the at least one fixed base station transceiver (200);
providing (24) a mobile coverage area (102) for the first further mobile base station transceiver (110), the mobile coverage area (102) projecting beyond the coverage area (202) of the at least one fixed base station transceiver (200) at least to some extent by an extended coverage area (104);
allocating radio resources of the mobile communication system (300) or of another mobile communication system to a transceiver module (12) of the mobile base station transceiver (100) based on information about a position and a motion vector of the mobile base station transceiver.

14. Program having a program code for performing the method according to Claim 13 when the program code is executed on a computer, a processor, a controller (16) or a programmable hardware component.

## Revendications

1. Dispositif (10) destiné à un émetteur-récepteur de station de base mobile (100) d'un système de communication mobile (300), dans lequel le système de communication mobile (300) présente en outre au moins un émetteur-récepteur de station de base fixe (200) et au moins un premier émetteur-récepteur de station de base mobile supplémentaire (110), le dispositif (10) comprenant
un module émetteur-récepteur (12) pour communiquer avec ledit au moins un émetteur-récepteur de station de base fixe (200) dans la zone de couverture (202) dudit au moins un émetteur-récepteur de station de base fixe (200), dans lequel le module émetteur-récepteur (12) est réalisé pour fournir une zone de couverture mobile (102) pour le premier émetteur-récepteur de station de base mobile supplémentaire (110), dans lequel la zone de couverture mobile (102) dépasse la zone de couverture (202) dudit au moins un émetteur-récepteur de station de base fixe (200) au moins en partie d'une zone de couverture agrandie (104) ;
un module de contrôle (16) pour contrôler le module émetteur-récepteur (12), dans lequel le module de contrôle (16) est réalisé pour attribuer des ressources radio du système de communication mobile (300) ou d'un autre système de communication mobile au module émetteur-récepteur (12) sur la base d'informations concernant une position et un vecteur de mouvement de l'émetteur-récepteur de station de base mobile.

2. Dispositif selon la revendication 1, comprenant en outre un module de positionnement (14) qui est réalisé pour déterminer des informations concernant la position et le vecteur de mouvement de l'émetteur-récepteur de station de base mobile (100).

3. Dispositif selon les revendications 1 ou 2, dans lequel le module de contrôle (16) est réalisé pour déterminer, sur la base des informations concernant la position et le vecteur de mouvement, des informations concernant une trajectoire de l'émetteur-récepteur de station de base mobile (100), et pour effectuer l'attribution des ressources radio sur la base des informations concernant la trajectoire et une information d'utilisation de fréquence le long de la trajectoire.

4. Dispositif selon l'une quelconque des revendications 1 à 3, dans lequel le système de communication (300) comprend au moins un émetteur-récepteur mobile (250), et dans lequel le module émetteur-récepteur (12) est en outre réalisé pour communiquer avec ledit au moins un émetteur-récepteur mobile (250).

5. Dispositif selon l'une quelconque des revendications 1 à 4, dans lequel le premier émetteur-récepteur de station de base mobile supplémentaire (110) est réalisé pour fournir une zone de couverture mobile supplémentaire (112) qui élargit la zone de couverture mobile (102) et la zone de couverture (202) de l'émetteur-récepteur de station de base fixe (200).

6. Dispositif selon l'une quelconque des revendications précédentes, qui est réalisé pour former avec le premier émetteur-récepteur de station de base mobile supplémentaire (110) un réseau à bonds multiples (en anglais « multi-hop ») pour élargir la zone de couverture (202) de l'émetteur-récepteur de station de base fixe (200).

7. Dispositif selon l'une quelconque des revendications précédentes, dans lequel le module émetteur-récepteur (12) est réalisé pour communiquer avec un deuxième émetteur-récepteur de station de base mobile supplémentaire (120) dans une zone de couverture (122) du deuxième émetteur-récepteur de station de base mobile supplémentaire (120), dans lequel le module émetteur-récepteur (12) est en outre réalisé pour fournir une zone de couverture mobile (102) pour le premier émetteur-récepteur de station de base mobile supplémentaire (110), dans lequel la zone de couverture mobile (102) du module émetteur-récepteur (12) dépasse la zone de couverture (122) du deuxième émetteur-récepteur de station de base mobile supplémentaire (120) au moins en partie d'une zone de couverture élargie (106).

8. Dispositif selon l'une quelconque des revendications précédentes, dans lequel le module émetteur-récepteur (12) est réalisé pour utiliser dans la zone de couverture élargie (102 ; 106) une autre fréquence que l'émetteur-récepteur de station de base fixe (200) dans la zone de couverture (202).

9. Dispositif selon l'une quelconque des revendications précédentes, dans lequel le module émetteur-récepteur (12) est réalisé pour communiquer par un ou plusieurs émetteurs-récepteurs de station de base mobiles supplémentaires (120 ; 110) avec un ou plusieurs émetteurs-récepteurs de station de base fixes supplémentaires (210).

10. Véhicule (500), comprenant un dispositif selon la revendication 1, dans lequel l'émetteur-récepteur de station de base mobile (100) est alimenté par le véhicule (500) en énergie nécessaire au fonctionnement, et/ou utilise les antennes (510) du véhicule (500) pour communiquer avec ledit au moins un émetteur-récepteur de station de base fixe (200) et/ou pour communiquer avec le premier émetteur-récepteur de station de base mobile supplémentaire (110) et/ou pour communiquer avec ledit au moins un émetteur-récepteur mobile (250).

11. Véhicule selon la revendication 10, qui est réalisé pour communiquer avec un émetteur-récepteur de station de base fixe (200) et pour communiquer directement avec un autre véhicule.

12. Système de communication mobile, comprenant plusieurs dispositifs selon la revendication 1, dans lequel au moins deux zones de couverture qui se recouvrent de deux émetteurs-récepteurs de station de base mobiles utilisent différentes plages de fréquences.

13. Procédé destiné à un émetteur-récepteur de station de base mobile (100) d'un système de communication mobile (300), dans lequel le système de communication mobile (300) présente en outre un émetteur-récepteur de station de base fixe (200) et au moins un premier émetteur-récepteur de station de base mobile supplémentaire (110), comprenant les étapes consistant à
communiquer (22) avec ledit au moins un émetteur-récepteur de station de base fixe (200) dans la zone de couverture (202) dudit au moins un émetteur-récepteur de station de base fixe (200) ;
fournir (24) une zone de couverture mobile (102) pour le premier émetteur-récepteur de station de base mobile supplémentaire (110), dans lequel la zone de couverture mobile (102) dépasse la zone de couverture (202) dudit au moins un émetteur-récepteur de station de base fixe (200) au moins en partie d'une zone de couverture agrandie (104) ;
attribuer des ressources radio du système de communication mobile (300) ou d'un autre système de communication mobile à un module émetteur-récepteur (12) de l'émetteur-récepteur de station de base mobile (100) sur la base d'informations concernant une position et un vecteur de mouvement de l'émetteur-récepteur de station de base mobile.

14. Programme comprenant du code programme pour exécuter le procédé selon la revendication 13 lorsque le code programme est exécuté sur un ordinateur, un processeur, un contrôleur (16) ou un composant matériel programmable.
